# EUROPEAN PATENT APPLICATION

(11) **EP 4 601 096 A1**
(43) Date of publication of application: **13.08.2025**
(21) Application number: 23874987.3
(22) Date of filing: 04.04.2023
(51) Int. Cl.: H01M 50/30, H01M 50/103

(54) **SECONDARY BATTERY**

(30) Priority: 06.10.2022 KR 20220127723
(71) Applicant: SAMSUNG SDI CO., LTD., Yongin-si, Gyeonggi-do 17084 (KR)
(72) Inventor: LEE, Chan Ho, Yongin-si, Gyeonggi-do 17084 (KR); BYUN, Sang Won, Yongin-si, Gyeonggi-do 17084 (KR); SEONG, Il Won, Yongin-si, Gyeonggi-do 17084 (KR); KIM, Sang Hoon, Yongin-si, Gyeonggi-do 17084 (KR); SONG, Hye Yeong, Yongin-si, Gyeonggi-do 17084 (KR); CHOE, Mi Rae, Yongin-si, Gyeonggi-do 17084 (KR); KOO, Ja Hyun, Yongin-si, Gyeonggi-do 17084 (KR); JUNG, Go Un, Yongin-si, Gyeonggi-do 17084 (KR); JUNG, Kang Kook, Yongin-si, Gyeonggi-do 17084 (KR)
(74) Representative: Marks & Clerk LLP
(86) International application number: PCT/KR2023/004542
(87) International publication number: WO 2024/075914

(57) **Abstract**

The present invention relates to a secondary battery which can reduce thermal energy of internal gas produced inside the case. Disclosed as an example is a secondary battery comprising: an electrode assembly; a case in which the electrode assembly is accommodated; a cap plate which seals the top of the case and includes a vent having a safety vent formed therein; and a rotating member which is coupled to the bottom of the vent hole.

## Description

### TECHNICAL FIELD

The present invention relates to a secondary battery.

### BACKGROUND ART

Batteries may be classified into square, cylindrical, and pouch types depending on their shape. The square or cylindrical battery may be manufactured by inserting an electrode assembly provided with a positive electrode, a negative electrode, and a separator into a metal case and then sealing the metal case, and the pouch-type battery may be manufactured by wrapping an electrode assembly with aluminum foil coated with an insulator.

Particularly, in the square or cylindrical battery, the electrode assembly may be inserted into the case and then be assembled to constitute the battery. In addition, a cap assembly may be provided with a safety vent, which is ruptured if a pressure of an internal gas exceeds a set pressure, and a vent hole through which the safety vent is formed, and the internal gas moves. The internal gas may be a high-temperature and high-pressure gas.

The above-described information disclosed in the background art of this invention is only intended to improve understanding of the background of the present invention and therefore may include information that does not constitute prior art.

### DISCLOSURE OF THE INVENTION

### TECHNICAL PROBLEM

The present invention provides a secondary battery which is capable of reducing thermal energy of an internal gas generated inside a case.

### TECHNICAL SOLUTION

A secondary battery according to the present invention may include: an electrode assembly; a case in which the electrode assembly is accommodated; a cap plate configured to seal an upper portion of the case and having a vent hole in which a safety vent is provided; and a rotating member coupled to a lower portion of the vent hole.

The rotating member may include: a fixed part fixed to a bottom surface of the cap plate; a rotating shaft provided at a center of the fixed part; a connecting rib configured to the rotating shaft to the fixed part; and a blade part coupled to the rotating shaft.

The connecting rib may extend outward from each of upper and lower ends of the rotating shaft and be coupled to the fixed part.

The connecting rib may be provided in plurality, which are spaced apart from each other.

The blade part may include: a body rotatably coupled to the rotating shaft; and a blade disposed outside the body.

A horizontal length of the blade may be less than a length of the connecting rib.

A vertical length of the blade may be less than a height of the central axis.

A spaced space may be defined between the body and the rotating shaft.

A diameter of the fixed part may be greater than a diameter of the vent hole.

The blade part may be configured to rotate by an internal gas generated in the case.

### ADVANTAGEOUS EFFECTS

The secondary battery according to an embodiment of the present invention may be provided with the rotating member coupled to the lower portion of the vent hole defined in the can plate to reduce the heat energy of the internal gas generated in the case.

### BRIEF DESCRIPTION OF THE DRAWINGS

FIG. 1 illustrates a perspective view of a secondary battery according to an embodiment of the present invention.
FIG. 2 illustrates a cross-sectional view of the secondary battery according to an embodiment of the present invention.
FIG. 3 illustrates an enlarged view of a portion A of FIG. 2.
FIG. 4 illustrates a plan view of a rotating structure.
FIG. 5 illustrates an exploded perspective view of the rotating structure.

### MODE FOR CARRYING OUT THE INVENTION

Hereinafter, preferred embodiments will be described in detail with reference to the accompanying drawings.

The present invention may, however, be embodied in many different forms and should not be construed as being limited to the embodiments set forth herein; rather, these embodiments are provided so that those skilled in the art thoroughly understand the present invention. Rather, these embodiments are provided so that this disclosure will be thorough and complete, and will fully convey the scope of the present invention to those skilled in the art.

Also, in the drawing figures, the dimensions of layers and areas may be exaggerated for clarity of illustration. Like reference numerals refer to like elements throughout. As used herein, the term "and/or" includes any and all combinations of one or more of the associated listed items. In this specification, it will also be understood that if a member A is referred to as being connected to a member B, the member A can be directly connected to the member B or indirectly connected to the member B with a member B therebetween.

The terms used herein are for illustrative purposes of the present invention only and should not be construed to limit the meaning or the scope of the present invention. As used in this specification, a singular form may, unless definitely indicating a particular case in terms of the context, include a plural form. Also, the expressions "comprise" and/or "comprising" used in this specification neither define the mentioned shapes, numbers, steps, operations, members, elements, and/or groups of these, nor exclude the presence or addition of one or more other different shapes, numbers, steps, operations, members, elements, and/or groups of these, or addition of these. The term "and/or" used herein includes any and all combinations of one or more of the associated listed items.

As used herein, terms such as "first," "second," etc. are used to describe various members, components, areas, layers, and/or portions. However, it is obvious that the members, components, areas, layers, and/or portions should not be defined by these terms. The terms do not mean a particular order, up and down, or superiority, and are used only for distinguishing one member, component, area, layer, or portion from another member, component, area, layer, or portion. Thus, a first member, component, area, layer, or portion which will be described may also refer to a second member, component, area, layer, or portion, without departing from the teaching of the present invention.

Spatially relative terms, such as "below", "beneath", "lower", "above", "upper" and the like, used herein for ease of description to describe one element or feature's relationship to another element(s) or feature(s) as illustrated in the figures. These spatially relative terms are intended for easy comprehension of the prevent invention according to various process states or usage states of the prevent invention, and thus, the present invention is not limited thereto. For example, an element or feature shown in the drawings is turned inside out, the element or feature described as "beneath" or "below" may change into "above" or "upper". Thus, the term "below" may encompass the term "above" or "below".

Hereinafter, preferred embodiments of the present invention will be described in detail with reference to the attached drawings so that a person having ordinary skill in the art to which the present invention pertains can easily carry out the present invention.

Here, portions having similar configurations and operations are given the same drawing reference numerals throughout the specification. Also, if it is assumed that one portion is electrically coupled to another portion, this includes not only cases in which the portions are directly connected, but also cases in which the portions are connected with another element therebetween.

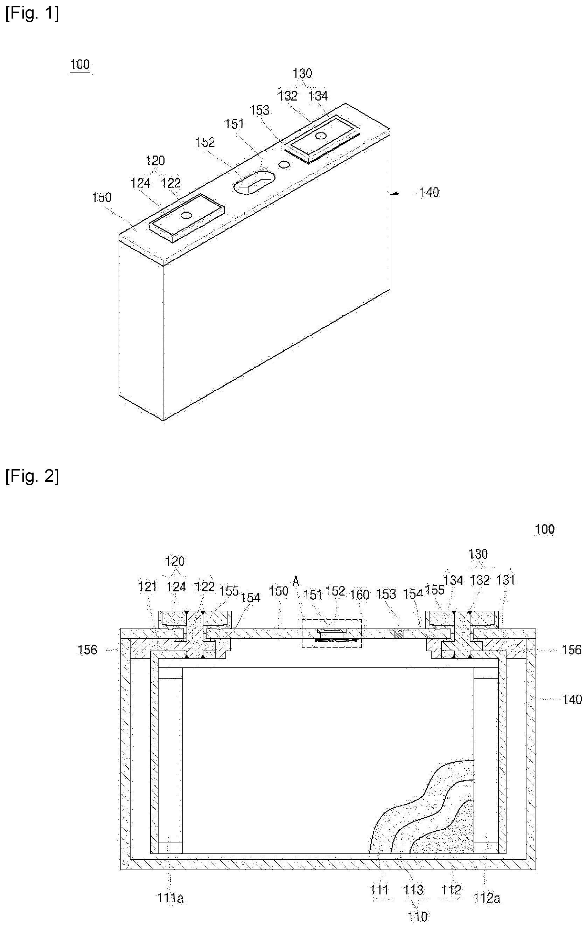

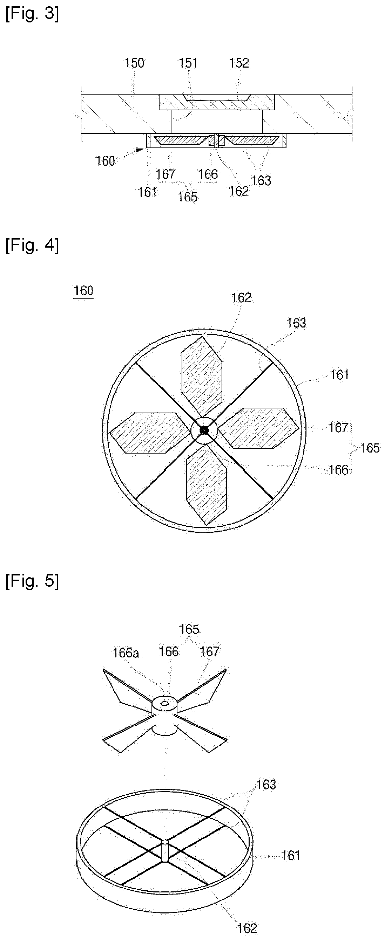

FIG. 1 illustrates a perspective view of a secondary battery according to an embodiment of the present invention. FIG. 2 illustrates a cross-sectional view of the secondary battery according to an embodiment of the present invention. FIG. 3 illustrates an enlarged view of a portion A of FIG. 2.

Referring to FIGS. 1 to 3, a secondary battery 100 according to an embodiment of the present invention includes an electrode assembly 110, a first terminal 120, a second terminal 130, a case 140, a cap plate 150, and a rotating member 160.

The electrode assembly 110 is provided by stacking or winding a stack of a first electrode plate 111, a separator 113, and a second electrode plate 112, each of which is provided in a thin plate shape or film shape. The first electrode plate 111 may function as a negative electrode, and the second electrode plate 112 may function as a positive electrode. Alternatively, depending on the choice of a person skilled in the art, the first electrode plate 111 and the second electrode plate 112 may be disposed with different polarities.

In some embodiments, the first electrode plate 111 may be provided by applying a first electrode active material such as graphite or carbon to a first electrode current collector 111a made of metal foil such as copper, a copper alloy, nickel, or a nickel alloy and may include a first electrode non-coating portion 111a that is an area on which the first electrode active material is not applied.

In some embodiments, the first electrode non-coating portion 111a may be referred to as a first current collection tab. The first electrode non-coating portion 111a protrudes from the first electrode plate 111. In the case of the stack structure, the first electrode non-coating portion 111a may protrude in a certain direction from the first electrode plate 111 and overlap each other at one side. In addition, in the case of the wound structure, the first electrode non-coating portion 111a may be disposed at a pre-calculated distance from the first electrode plate 111 so that the first electrode non-coating portion 111a protrudes from the same area after being wound and overlap each other. Because the first electrode non-coating portion 111a has a structure integrated with the first electrode plate 111 and is drawn out from each of the first electrode plates 111, there may be an advantage of being able to improve current collection efficiency of the electrode assembly 110. However, the first electrode non-coating portion 111a may also be provided through a separate member from the first electrode plate 111 depending on the choice of a person skilled in the art.

In some embodiments, the second electrode plate 112 is provided by applying a second electrode active material such as transition metal oxide to a second electrode current collector made metal foil such as aluminum or an aluminum alloy and may include a second electrode non-coating portion 112a that is an area on which the second electrode active material is not applied. In some embodiments, the second electrode non-coating portion 112a may be referred to as a second current collection tab. The second electrode non-coating portion 112a protrudes from the second electrode plate 112. The second electrode non-coating portion 112a may have the same shape as the first electrode non-coating portion 111a. However, the first electrode non-coating portion 111a may protrude to one side of the electrode assembly 110, and the second electrode non-coating portion 112a may protrude to the other side of the electrode assembly 110.

The separator 113 may be disposed between the first electrode plate 111 and the second electrode plate 112 to prevent short circuit and allow movement of lithium ions and may include polyethylene, polypropylene, or a composite film of polyethylene and polypropylene.

In addition, the electrode assembly 110 and an electrolyte may be substantially accommodated in the case 140. The electrolyte may include an organic solvent such as ethylene carbonate (EC), propylene carbonate (PC), diethyl carbonate (DEC), ethyl methyl carbonate (EMC), or dimethyl carbonate (DMC), and a lithium salt such as LiPF₆ or LiBF₄. The electrolyte may be liquid, solid, or gel.

The first terminal 120 may be made of a metal and be electrically connected to the first electrode plate 111. In some embodiments, the first terminal 120 may include a first current collection plate 121, a first terminal pillar 122, and a first terminal plate 124. The first current collection plate 121 may be electrically connected to the first electrode non-coating portion 111a protruding from one end of the electrode assembly 110. The first current collection plate 121 may include a first area to which the first electrode non-coating portion 111a is connected, and a second area that is bent from an upper portion of the first area and disposed at an upper portion of the electrode assembly 110. A terminal hole may be defined in the second area of the first current collection plate 121, and the first terminal pillar 122 may be fitted into the terminal hole and then riveted and/or welded. The first terminal pillar 122 may protrude and extend upward by a certain length through a cap plate 151 to be described later and may be electrically connected to the first current collection plate 121 at a lower portion of the cap plate 150. The first terminal plate 124 may be coupled to the first terminal pillar 122.

The second terminal 130 may be made of a metal and be electrically connected to the second electrode plate 112. In some embodiments, the second terminal 130 may include a second current collection plate 131, a second terminal pillar 132, and a second terminal plate 134. The second current collection plate 131 may be electrically connected to the second electrode non-coating portion 112a protruding from the other end of the electrode assembly 110. The second current collection plate 131 may include a first area to which the second electrode non-coating portion 112a is connected, and a second area that is bent from an upper portion of the first area and disposed at the upper portion of the electrode assembly 110. A terminal hole may be defined in the second area of the second current collection plate 131, and a second terminal pillar 132 may be fitted into the terminal hole and then riveted and/or welded. The second terminal pillar 132 may protrude and extend upward by a certain length through a cap plate 150 to be described later and may be electrically connected to the second current collection plate 131 at a lower portion of the cap plate 150. The second terminal plate 134 may be coupled to the second terminal pillar 132. The second terminal plate 134 may be electrically connected to the cap plate 150, and the cap plate 150 and the case 140 may have the same polarity (e.g., positive polarity) as the second terminal 130.

The case 140 may be made of a conductive metal such as aluminum, an aluminum alloy, or nickel-plated steel and have an approximately hexahedral shape with an opening into which the electrode assembly 110 is inserted and seated. The cap plate 150 may be coupled to the opening of the case 140 to seal the case 140. An inner surface of the case 140 may be basically insulated to prevent the electrical short circuit from occurring therein. In addition, in some cases, one electrode of the electrode assembly 110 may be electrically connected to the case 140 through the cap plate 150. For example, the case 140 may act as a positive electrode.

The cap plate 150 may seal the opening of the case 140 and may be made of the same material as the case 140. In some embodiments, the cap plate 150 may be coupled to the case 140 by laser welding. In some embodiments, the cap plate 150 may include a vent hole 151, a safety vent 152, an electrolyte injection port 153, a gasket 154, an upper coupling member 155, and a lower insulating member 156.

The vent hole 151 may be defined in an approximately center of the cap plate 150, and the safety vent 152 may be provided to have a relatively thin thickness compared to other areas inside the vent hole 151. The safety vent 152 may prevent the secondary battery 100 according to an embodiment of the present invention from being exploded if a pressure inside the case 140 is higher than a set rupture pressure. In addition, the electrolyte injection port 153 for injecting the electrolyte may be provided at one side of the cap plate 150. The electrolyte may be injected into the case 140 through the electrolyte injection port 153, and then, the electrolyte injection port 153 may be sealed by a stopper. In addition, terminal holes may be defined at both sides of the cap plate 150 to pass through the first terminal pillar 122 and the second terminal pillar 132.

The gasket 154 may be made of an insulating material. The gasket 154 may be coupled to the terminal hole together with the first and second terminal pillars 122 and 132 at the lower portion of the cap plate 150 to seal a gap between each of the first and second terminal pillars 122 and 132 and the cap plate 150. The gasket 154 may prevent moisture from being permeated into the secondary battery 100 or prevent the electrolyte inside the secondary battery 100 from leaking to the outside.

The upper coupling member 155 may be coupled to the terminal hole together with the first and second terminal pillars 122 and 132 at the upper portion of the cap plate 150 to seal a gap between each of the first and second terminal pillars 122 and 132 and the cap plate 150. The upper coupling member 155 may be in contact with the gasket 154. In some embodiments, the upper coupling member 155 coupled to the first terminal 120 may insulate the first terminal 120 and the cap plate 150 from each other, and the upper coupling member 155 coupled to the second terminal 130 may electrically connect the second terminal 130 and the cap plate 150 to each other.

The lower insulating member 156 may be provided between each of the first current collection plate 121 and the second current collection plate 131 and the cap plate 150 to prevent short circuit between the first current collection plate 121 and the cap plate 150 and short circuit between the second current collection plate 131 and the cap plate 150.

FIG. 4 illustrates a plan view of a rotating structure, and FIG. 5 illustrates an exploded perspective view of the rotating structure.

Referring to FIGS. 4 and 5, a rotating member 160 may be coupled to the vent hole 151 at a lower portion of the cap plate 150. The rotating member 160 may include a fixed part 161, a rotating shaft 162, a connecting rib 163, and a blade part 165.

The fixed part 161 may be coupled to a bottom surface of the cap plate 150. The fixed part 161 may be provided in a cylindrical shape with upper and lower portions opened. An upper end of the fixed part 161 may be fixed to the bottom surface of the cap plate 150. For example, the fixed part 161 may be fixed to the bottom surface of the cap plate 150 by welding. In some embodiments, the fixed part 161 may be made of the same material as the cap plate 150. In addition, the fixed part 161 may be fixed to the bottom surface of the cap plate 150 through a separate fixing member (e.g., a bolt). Here, the fixed member may be coupled to the cap plate 150 by passing from an upper portion of a lower portion of the fixed part 161. A diameter of the fixed part 161 may be greater than a diameter of the vent hole 151. Thus, the rotating member 160 may cover the safety vent 152 provided in the vent hole 151.

The rotating shaft 162 may be disposed at an inner center of the fixed part 161 and be coupled to the fixed part 161 by the connecting rib 163. The rotating shaft 162 may serve as a central axis around which the blade part 165 rotates. A height of the rotating shaft 162 may be the same as a height of the fixed part 161. The blade part 165 may be coupled to the rotating shaft 162.

The connecting rib 163 may extend outward from each of upper and lower ends of the rotating shaft 162 and be connected to the fixed part 161. In some embodiments, the connecting rib 163 may be coupled to the rotating shaft 162 and the fixed part 161 by welding. In some embodiments, after the blade part 165 is coupled to the rotating shaft 162, the connecting rib 163 may be coupled to the rotating shaft 162 and the fixed part 161 by the welding. Alternatively, the connecting rib 163 may also be integrated with the rotating shaft 162 or the fixed part 161. In this case, the fixed part 161 and the rotating shaft 162 may have a structure in which the fixed part 161 and the rotating shaft 162 are separated into upper and lower portions, and the blade part 165 is fitted between the fixed part 161 and the rotating shaft 162.

The connecting rib 163 may be provided in plurality. The connecting rib 163 disposed on the upper end of the rotating shaft 162 may be in contact with the bottom surface of the cap plate 150. Because the connecting ribs 163 disposed at the upper and lower portions of the fixed part 161 are spaced apart from each other, an internal gas generated inside the case 140 may rupture the safety vent 162 disposed at the upper portion of the fixed part 161 and then be discharged to the outside through the vent hole 161.

The blade part 165 may be coupled to the rotating shaft 162. The connecting rib 163 disposed at each of the upper and lower portions of the rotating shaft 162 may prevent the blade part 165 from being separated from the rotating shaft 162. The blade part 165 may include a body 166 and a blade 167.

The body 166 may include a hole 166a, into which the rotating shaft 162 is inserted, in a center thereof. The body 166 may be rotatably coupled to the rotating shaft 162. That is, the body 166 may not be fixed to the rotating shaft 162, and a spaced space may be defined between the body 166 and the rotating shaft 162. Thus, the body 166 may rotate together with the blade 167 by a high-pressure gas generated inside the case 140.

The blade 167 may be provided in plurality outside of the body 166. The blade 167 may be integrated with the body 166. The blade 167 may extend outward from the body 166 (or toward the fixed part 161). A horizontal length of the blade 167 may be less than a length of the connecting rib 163. In addition, a vertical length of the blade 167 may be less than a height of a central axis 162. The blade 167 may rotate by the internal gas generated inside the case 140. The blade 167 may have any shape if the blade167 is capable of rotating by the internal gas. For example, the blade 167 may be a blade used in an electric fan or a fan. In addition, the blade 167 may discharge the gas inside the case 140 to the outside.

If an abnormal situation such as the short circuit or overcurrent occurs in the secondary battery 100, a gas may be generated inside the case 140, and if a pressure inside the case 140 exceeds a reference pressure, the safety vent 152 may be ruptured. Here, the gas generated in the case may be a high-temperature and high-pressure gas. If the internal gas is discharged through the vent hole 151, the blade part 165 of the rotating member 160 rotates due to the pressure of the internal gas. The blade part 165 may serve to lower the temperature of the internal gas discharged through the vent hole 151. That is, the rotating member 160 may serve to reduce thermal energy of the internal gas, thereby preventing a temperature of an adjacent secondary battery from rising. In addition, the rotating member 160 may serve to concentrate the internal gas into the vent hole 151, thereby allowing the internal gas to be quickly discharged through the vent hole 151.

The above-mentioned embodiment is merely an embodiment for realizing the secondary battery according to the present invention, and thus, the present invention is not limited to the foregoing embodiment, and also it will be understood by those of ordinary skill in the art that various changes in form and details may be made therein without departing from the spirit and scope of the present invention as defined by the following claims.

### INDUSTRIAL APPLICABILITY

The present invention relates to the secondary battery.

## Claims

1. A secondary battery comprising:
an electrode assembly;
a case in which the electrode assembly is accommodated;
a cap plate configured to seal an upper portion of the case and having a vent hole in which a safety vent is provided; and
a rotating member coupled to a lower portion of the vent hole.

2. The secondary battery as claimed in claim 1, wherein the rotating member comprises:
a fixed part fixed to a bottom surface of the cap plate;
a rotating shaft provided at a center of the fixed part;
a connecting rib configured to the rotating shaft to the fixed part; and
a blade part coupled to the rotating shaft.

3. The secondary battery as claimed in claim 2, wherein the connecting rib extends outward from each of upper and lower ends of the rotating shaft and is coupled to the fixed part.

4. The secondary battery as claimed in claim 2, wherein the connecting rib is provided in plurality, which are spaced apart from each other.

5. The secondary battery as claimed in claim 2, wherein the blade part comprises:
a body rotatably coupled to the rotating shaft; and
a blade disposed outside the body.

6. The secondary battery as claimed in claim 5, wherein a horizontal length of the blade is less than a length of the connecting rib.

7. The secondary battery as claimed in claim 5, wherein a vertical length of the blade is less than a height of the central axis.

8. The secondary battery as claimed in claim 5, wherein a spaced space is defined between the body and the rotating shaft.

9. The secondary battery as claimed in claim 2, wherein a diameter of the fixed part is greater than a diameter of the vent hole.

10. The secondary battery as claimed in claim 2, wherein the blade part is configured to rotate by an internal gas generated in the case.
